# EUROPÄISCHE PATENTSCHRIFT

(11) **EP 0 714 967 B1**
(45) Veröffentlichungstag und Bekanntmachung des Hinweises auf die Patenterteilung: **03.03.1999**
(21) Anmeldenummer: 95203255.5
(22) Anmeldetag: 27.11.1995
(51) Int. Cl.: C09K 11/02, H01J 29/18, H01J 29/20, C09K 11/56, C09K 11/58, C09K 11/88

(54) **Lumineszierender Schirm mit einer Leuchtstoffzusammensetzung**
Luminescent screen with a luminescent composition
Ecran luminescent ayant une composition luminescente

(30) Priorität: 01.12.1994 DE 4442706; 02.12.1994 DE 4442905
(43) Veröffentlichungstag der Anmeldung: 05.06.1996
(73) Patentinhaber: Philips Patentverwaltung GmbH, 22335 Hamburg (DE); Koninklijke Philips Electronics N.V., 5621 BA Eindhoven (NL)
(72) Erfinder: Haase, Markus, Dr., c/o Philips, D-22335 Hamburg (DE); Bechtel, Helmut, Dr, c/o Philips, D-22335 Hamburg (DE); Czarnojan, Wolfram, Dr, c/o Philips, D-22335 Hamburg (DE); Mayr, Walter, Dr, c/o Philips, D-22335 Hamburg (DE); Lauter, Joseph, Dr, c/o Philips, D-22335 Hamburg (DE)
(74) Vertreter: Volmer, Georg, Dipl.-Ing.

(56) Entgegenhaltungen:
- WO-A-90/12850
- US-A- 5 684 358
- J. PHOTOCHEM. PHOTOBIOL., A (1994), 79(3), 189-95 CODEN: JPPCEJ;ISSN: 1010-6030, 1994, XP002011133 ZANG, LING ET AL: "Photochemistry of semiconductor particles. I. Optical properties of ZnS sols"
- LANGMUIR (1992), 8(9), 2215-18 CODEN: LANGD5;ISSN: 0743-7463, 1992, XP002011134 RESCH, U. ET AL: "Absorption and fluorescence behavior of redispersible cadmium sulfide colloids in various organic solvents"
- DATABASE WPI Section Ch, Week 8214 Derwent Publications Ltd., London, GB; Class L03, AN 82-28055E XP002011135 & SU-A-834 098 (MIRONENKO V M) , 2.Juni 1981

## Beschreibung

Die Erfindung betrifft einen lumineszierender Schirm, insbesondere einen Flachbildschirm, beispielsweise ein Niederenergie-Kathodenstrahl-Display, mit einer Leuchtstoffzusammensetzung aus einem sulfid- und/oder selenidhaltigen Leuchtstoff mit einer Beschichtung.

Niederenergie-Kathodenstrahl-Displays sind eine neue Entwicklung auf dem Gebiet der Leuchtanzeigevorrichtungen, die durch den Trend zu Flachbildschirmen entstanden ist. Flachbildschirme wurden für die drei Marktsegmente Büroautomatisierung, Audio/Video-Technik sowie Navigation und Unterhaltung entwickelt. Im Bürobereich sind vorallem die mobilen Anwendungen zu nennen, angefangen vom Notebook-Computer, Personal Digital Assistant, Faxgerät bis hin zum Mobiltelefon. Im Audio- und Videobereich sollen die Flachbildschirme nicht nur in Camcordern Verwendung finden, sondern auch in Fernsehgeräten und Monitoren. Der dritte Bereich umfaßt Flachbildschirme als Monitore für Navigationssysteme in Autos und Flugzeugen, aber auch die Displays von Spielekonsolen.

Bei Flachbildschirmen ist aus geometrischen und anderen Gründen die maximale Beschleunigungsspannung auf Werte beschränkt, die deutlich unter denen für herkömmliche Kathodenstrahl-Displays liegen. Da andererseits die erreichbare Bildhelligkeit und die Energieeffizienz des Displays mit sinkender Beschleunigungsspannung abnimmt, darf die Beschleunigungsspannung auch nicht zu sehr verringert werden. Niederenergie-Kathodenstrahl-Displays werden deshalb mit Beschleunigungsspannungen im Bereich von etwa 2 bis 10 kV betrieben. Die Beschleunigungs-spannungen liegen damit deutlich unter denen herkömmlicher Kathodenstrahl-Displays, die mit einer Spannung von typischerweise 25 - 35 kV betrieben werden, sie liegen aber auch deutlich über der Beschleunigungsspannung von Vakuum-Fluoreszenzanzeigen, die etwa 0,01 bis 0,3 kV beträgt.

Es ist üblich, die Leuchtstoffe für Kathodenstrahl-Displays, auch wenn diese herkömmlicher Art sind, einer Oberflächenbehandlung zu unterziehen, damit sie die an sie gestellten Anforderungen besser erfüllen können.

Einmal stellt sich die Anforderung der leichten Dispergierbarkeit der Leuchtstoffzusammensetzungen in Dispersionslösungen für die photolithografischen Fertigungsprozesse für lumineszierende Schirme. Dafür wurden Dispersionsoberflächenbeschichtungen entwickelt, die frei fließende Pulver ergeben, aus denen sich leicht herstellbare und stabile Dispersionen erzeugen lassen.

Ein anderer Aspekt bei der Entwicklung von Beschichtungen ist der Schutz gegen agressive Chemikalien, die bei der photolithografischen Fertigung eingesetzt werden. Besonders bei dem üblicherweise verwendeten "flow coating"- Prozeß, bei dem Dichromate verwendet werden, werden ungeschützte Leuchtstoffe angegriffen.

Weitere Anforderungen werden an Leuchtstoffe in Hinsicht auf die Farbqualität gestellt. Dafür wird bei den sogenannten "pigmentierten" Leuchtstoffen die Beschichtung aus Dispersionshilfsmitteln ersetzt oder auch kombiniert mit einer zweiten Art von Beschichtung, deren wesentlicher Bestandteil Farbpartikel sind. Die Farbpartikel reduzieren die Reflexion des Umgebungslichtes auf den Leuchtstoffkörnern und erhöhen damit den Kontrast des auf dem Bildschirm dargestellten Bildes.

Bei Leuchtstoffen, bei denen die Farbwerte des emittierten Lichtes außerhalb der Norm liegen, kann es eine weitere Funktion dieser Farbpartikel sein, die Farbwerte der Leuchtstoffzusammensetzung an die Norm anzugleichen, dadurch daß sie als Farbfilter wirken.

Funktionell wiederum andere Beschichtungen werden bei Leuchtstoffen für Vakuum-Fluoreszenz-Anzeigen verwendet, in denen die Anregung mit niederenergetischen Elektronen von einigen 10 Volt bis maximal einigen 100 Volt erfolgt. Hier gilt es Aufladungseffekte während der Anregung der Leuchtstoffe zu verhindern, die die Effizienz der Anregung beeinträchtigen. Beschichtungen für Leuchtstoffpulver für Vakuum-Fluoreszenz-Anzeigen bestehen deshalb aus leitfähigkeitsverbessernden Materialien wie Indium-Zinnoxid, feine Metallpulver u.ä.

Ganz neue Anforderungen werden an Leuchtstoffe bei deren Verwendung für Niederenergie-Kathodenstrahl-Displays gestellt. Um trotz der niedrigen Anregungsspannung eine gute Bildhelligkeit zu erzielen, müssen diese Displays mit hohen Stromstärken betrieben werden. Damit die benötigte Stromstärke nicht unpraktikabel hohe Werte erreicht, müssen gleichzeitig Leuchtstoffe mit hoher Effizienz verwendet werden. Selbst wenn die Architektur des Displays extrem hohe Stromstärken zuläßt, kann die niedrige Effizienz eines Leuchtstoffes nicht beliebig durch Erhöhung der Stromstärke ausgeglichen werden, da die Leuchtintensität des Leuchtstofffes nach zunächst linearem Anstieg mit der Stromstärke schließlich einem Sättigungswert zustrebt. Bei welcher Stromstärke dieser Sättigungswert erreicht wird, hängt von der Art des Leuchtstoffes und dessen Präparationsbedingungen ab.

Für Niederenergie-Kathodenstrahl-Displays ist es deshalb besonders wichtig, daß die eingesetzten Leuchtstoffe eine hohe Effizienz aufweisen und ferner auch, daß sie den besagten Sättigungswert erst bei hohen Stromstärken erreichen. Die Bedingung hoher Effizienz bei ausreichend hohem Sättigungswert erfüllen nur sehr wenige Leuchtstoffe, insbesondere sind es die sulfid- und selenidhaltigen Leuchtstoffe, wie ZnS:Ag, ZnS:Cu, ZnCdSe:Ag u.ä.

Unter den Anregungsbedingungen in Niederenergie-Kathodenstrahl-Displays werden allerdings gerade diese sulfid- und/oder selenidhaltigen Leuchtstoffe sehr schnell degradiert, d.h. der Beschuß mit niederenergetischen Elektronen führt zu einer beschleunigten Abnahme der Leuchtintensität bzw. Effizienz des Leuchtstoffes. Die geringe Eindringtiefe der niederenergetischen Elektronen bewirkt vermutlich, daß die strahlungsinduzierten Reaktionen in den Randschichten der Leuchtstoffkörner konzentriert sind und dort aber verstärkt auftreten.

Man beobachtet jedenfalls bei konventionell beschichteten Displays, die durch eine Niederenergie-Kathodenstrahlröhre angeregt werden, eine rasche Abnahme der Helligkeit. Bei farbigen Displays, bei denen üblicherweise drei verschiedene Leuchtstoffe eingesetzt werden, führt dies zusätzlich zu einer langsamen Verschiebung der Farbwerte aller Mischwerte, wenn nicht jeder der eingesetzten Leuchtstoffe gleich schnell degradiert.

Andererseits sollen aber kommerzielle Niederenergie-Kathodenstrahl-Displays, z B. Farbfernseher mit flachem Bildschirm, mehrere tausend Betriebstunden ein gleichbleibend helles Bild mit unverfälschten Farbwerten liefern.

US-A-5 684 358 betrifft lumineszierende Schirme mit einem Leuchtstoffzusammensetzung aus einem sulfid- und/oder selenidhaltigem Leuchtstoff mit einer Beschichtung, die eine Ge-Verbindung enthält. Diese Schirme weisen eine in der Zeit stabile Bildhelligkeit auf.

Es ist daher Aufgabe der vorliegenden Erfindung, weiteren lumineszierenden Schirm mit einer Leuchtstoffzusammensetzung aus einem sulfid- und/oder selenidhaltigen Leuchtstoff und einer Beschichtung zu schaffen, die bei einer Anregung mit Elektronen von etwa 1 bis 10 kV nicht degradiert.

Erfindungsgemäß wird die Aufgabe gelöst durch einen lumineszierenden Schirm mit einer Leuchtstoffzusammensetzung aus einem sufid- und/oder selenidhaltigem Leuchtstoff mit einer Beschichtung, die ein oder mehrere catena-Polyphosphate von ein oder mehreren Erdalkalimetallen, Zink, Cadmium und/oder Mangan enthält.

Für einen solchen luminszierenden Schirm können die Vorteile der effizienten sulfid- und/oder selenidhaltigen Leuchtstoffe genutzt werden und dieser lumineszierende Schirm bleibt lange Zeit hell und kontrastreich.

Eine Beschichtung, die im wesentlichen aus catena-Polyphosphaten der genannten Art besteht, wirkt überraschenderweise als stabilisierender Schutzüberzug, der die durch niederenergetische Strahlung induzierten Korrosionsvorgänge in sulfid- und/oder selenidhaltigen Leuchtstoffen begrenzt.

Die wasserfreien catena-Polyphosphate der oben genannten Art bilden dabei eine harte, wasserunlösliche Beschichtung auf den Leuchtstoffpartikeln, sie reagieren nicht mit diesen sulfidischen oder selenidhaltigen Substraten und sie werden selbst durch Strahlung nicht degradiert. Da sie farblos sind, beeinflussen sie auch nicht die Farbwerte der Leuchtstoffe. Sie sind hydrophil, sodaß sich die beschichteten Partikel leicht dispergieren lassen.

Es ist bevorzugt, daß die obengenannten catena-Polyphosphate eine Kettenlänge von 3 bis 90 haben.

Im Rahmen der vorliegenden Erfindung kann es bevorzugt sein, daß die Beschichtung catena-Polyphospate ein oder mehrerer Erdalkalimetalle und 0,1 bis 20 Gew.-% catena-Polyphosphate von Zink, Cadmium und/oder Mangan enthält.

Eine bevorzugte Ausführung der Erfindung ist dadurch gekennzeichnet, daß das Erdalkalimetall Calcium oder Strontium oder Barium ist und die Beschichtung 10 Gew.-% Cadmium-catena-polyphosphat enthält.

Es ist weiterhin bevorzugt, daß Erdalkalimetall wenigstens ein Element aus der Gruppe Calcium, Strontium und/oder Barium ist und die Beschichtung 5 Gew.-% Zink-catena-polyphosphat und/oder 5 Gew.-% Mangan-catena-polyphosphat enthält.

Ein kleiner Anteil an Cadmium, Zink oder Mangan in der Beschichtungslösung wirkt sich positiv auf die Abscheidung der Beschichtung aus.

Es kann weiterhin bevorzugt sein, daß der Leuchtstoff aus aktiviertem Zinksulfid, Zink-Cadmiumsulfid, Zinksulfidselenid und/oder Zink-Cadmium-Sulfidselenid besteht und die Beschichtung ein oder mehrere Calcium-catena-polyphosphaten enthält. Diese Leuchtstoffzusammensetzung zeichnet sich durch eine besonders gute Haftung der Beschichtung auf dem Leuchtstoffsubstrat aus.

Eine bevorzugte Ausführung der Erfindung ist dadurch gekennzeichnet, daß der Leuchtstoff aus aktiviertem Zinksulfid, Zinkselenid und/oder Zinksulfidselenid besteht und die Beschichtung im wesentlichen aus Cadmiumpolyphosphat besteht. Cadmiumpolyphosphat läßt sich besonders gut aus einer wässrigen Lösung abscheiden. Eine vorhergehende Aktivierung des Leuchtstoffes ist nicht notwendig.

Eine weitere bevorzugte Ausführung der Erfindung ist dadurch gekennzeichnet, daß der Leuchtstoff aus aktiviertem Zinksulfid, Zinkselenid und/oder Zinksulfidselenid besteht und die Beschichtung im wesentlichen aus Zinkpolyphosphat besteht. Diese Beschichtung haftet besonders gut auf zinkhaltigen Leuchtstoffen.

Es kann ebenfalls bevorzugt sein, daß der Leuchtstoff aus aktiviertem Cadmiumsulfid und/oder Cadmiumsulfidselenid und die Beschichtung im wesentlichen aus Cadmiumpolyphosphat besteht. Diese Beschichtung haftet besonders gut auf cadmiumhaltigen Leuchtstoffen.

Die Leuchtstoffzusammensetzung kann auch eine Deckschicht aus einem Dispersionshilfsmittel aufweisen. Ansich ist die erfindungsgemäße Beschichtung abriebfest. sodaß der beschichtete Leuchtstoff als solcher transportiert und verwendet werden kann. Es ist jedoch üblich, daß Leuchtstoffpulver eine Deckschicht aus einem Dispersionshilfsmittel erhalten, das die Handhabung des Pulvers erleichtert. Da es sich gezeigt hat, daß Dispersionshilfsmittel, insbesondere solche, die oberflächlich gebundene Hydroxylgruppen enthalten, wie z.B. SiO₂, die Alterung der Leuchtstoffe noch verstärken, ist es besonders vorteilhaft, einen sulfid- oder selenidhaltige Leuchtstoff, der eine Deckschicht aus einem Dispersionshilfsmittel wie SiO₂ aufweist, durch eine stabilisierende Zwischenschicht aus ein oder mehreren Erdalkalimetall-catena- Polyphosphaten der oben genannten Art zu schützen.

Aus dem gleichen Grund ist die Kombination aus einem sulfid- und/oder selenidhaltigen Leuchtstoff mit einer stabilisierenden Beschichtung aus ein oder mehreren der oben genannten Erdalkalimetall-catena- Polyphosphaten mit einer Deckschicht, die Pigmente enthält, insbesondere solche mit oberflächlich gebundenen Hydroxylgruppen, besonders vorteilhaft.

Zur Herstellung der Beschichtung für einen sulfid- und/oder selenidhaltigen Leuchtstoff, die im wesentlichen aus ein oder mehreren Erdalkalimetall-catena-Polyphosphaten besteht, wird in einem ersten Schritt der Leuchtstoff als Pulver in eine wasserhaltige Lösung eines oder mehrerer wasserlöslichen Polyphosphate eingerührt, dann der pH-Wert der so erhaltenen Suspension auf 5 - 8 eingestellt wird und unter Konstanthaltung des pH-Wertes durch Zugabe einer wässrigen Lösung eines wasserlöslichen Calcium- und/oder Strontium-und/oder Bariumsalzes ein oder mehrere Erdalkalimetall-catena-Polyphosphate auf dem Leuchtstoffpulver ausgefällt. Es kann bevorzugt sein, daß die wässrigen Lösung zusätzlich die wasserlöslichen Salze von Zink, Cadmium und/oder Mangan enthält.

Zur Herstellung einer Beschichtung für einen sulfid- und/oder selenidhaltigen Leuchtstoff, die im wesentlichen aus Zink- und /oder Cadmium- und/oder Mangan-catena-polyphosphat besteht, wird in einem ersten Schritt der Leuchtstoff als Pulver in eine wasserhaltige Lösung eines wasserlöslichen Alkali- oder Ammoniumpolyphosphates mit pH < 5,5 eingerührt, dann der pH-Wert der so erhaltenen Suspension auf > 5,5 eingestellt und durch Zugabe eines wasserlöslichen Zink- und/oder Cadmium- und/oder Mangansalzes Zink-, Cadmium- und/oder Mangan-catena-polyphosphat auf dem Leuchtstoffpulver ausgefällt.

Die Vorbehandlung mit einem oder mehreren wasserlöslichen Polyphosphaten wirkt in zweierlei Hinsicht vorteilhaft: zunächst wirkt Polyphosphat dispergierend auf die Leuchtstoffpulver, die bekanntlich zu Agglomeration neigen; weiterhin aktiviert die Vorbehandlung die Leuchtstoffoberfläche, es läßt sich mehr Erdalkalimetall,- Zink-, Cadmium, oder Mangan-catena-Polyphospat auf der Oberfläche niederschlagen als ohne diese Vorbehandlung.

Die Bindung der erfindungsgemäßen Beschichtung an die sulfid- und/oder selenidhaltigen Leuchtstoffe ist so stark, daß sie selbst in wässriger Lösung beständig ist. Einige andere Schwermetallpolyphosphate haften ebenfalls gut auf sulfid- und/ selenidhaltigen Leuchtstoffen, es wurde aber überraschenderweise gefunden, daß die erfindungsgemäßen Erdalkalimetall, Zink-, Cadmium-, und/oder Mangan-catena-Polyphosphate außerdem in der Lage sind, die Degradation von sulfidischen und/oder selenidischen Leuchtstoffen durch niederenergetische Kathodenstrahlung zu verhindern.

Die wasserhaltige Lösung des wasserlöslichen Tetraalkylammoniumpolyphosphates kann ein mit Wasser mischbares organisches Lösungsmittel enthalten. Die Verwendung von wässrig-organischen Lösungsmittelgemischen erhöht überraschenderweise die Bedeckung der Leuchtstoffsubstratoberfläche durch die Beschichtung. In diesen wässrig-organischen Lösungsmitteln sind die Tetralkylammoniumpolyphosphate, z.B. Tetramethylammonium-Polyphosphat oder Tetrabutylammoniumpolyphosphat sehr gut löslich.

Im Rahmen der vorliegenden Erfindung kann es auch bevorzugt sein, daß die wasserhaltige Lösung der wasserlöslichen Alkalipolyphosphate ein mit Wasser mischbares organisches Lösungsmittel und ein Tetraalkylammoniumsalz enthält. Das Tetraalkylammoniumsalz, z.B. Tetraalkylammoniumnitrat wirkt als Phasentransfer-Reagenz. Es erhöht die Löslichkeit der Alkalipolyphosphate in wässrig-organischen Lösungsmittelgemischen und fördert die Aktivierung der Substratoberfläche.

Nachstehend wird die Erfindung weiter erläutert und es werden Ausführungsbeispiele aufgeführt.

Die sulfid- und/oder selenidhaltigen Leuchtstoffe, die gemäß der Erfindung mit einer stabilisierenden Beschichtung versehen werden, sind in erster Linie die Leuchtstoffe auf der Basis von ZnS wie ZnS:Ag, ZnS:Cu, ZnS:Mn u.ä. Weiterhin können erfindungsgemäß auch Leuchtstoffe auf der Basis von Cadmiumsulfid, Zinkselenid und Cadmiumsulfidselenid, sowie von aktivierten Mischkristall-Leuchtstoffen wie Zinkcadmiumsulfid, Zinksulfidselenid stabilisiert werden.

Diese Leuchtstoffsubstrate können als Primärpartikel oder als Latex und Pigmenten gemischte Granulate vorliegen. Die Korngröße der Leuchtstoffpartikel ist nicht kritisch. Die Primärkorngröße handelsüblicher Leuchtstoffe liegt bei etwa 2 bis 20µ.

Diese Substratpartikel werden mit einer dünnen und gleichmäßigen Schicht aus ein oder mehreren Erdalkalimetall-catena-Polyphosphaten überzogen. Die Schichtdicke beträgt üblicherweise 0,001 bis 0,2µm und ist damit so dünn, daß Elektronen ohne wesentlichen Energieverlust durchdringen können.

Die Beschichtung kann zusätzlich organische oder anorganische Bindemittel wie Latex, Methylcellulose oder Aluminiumphosphat und SiO₂ enthalten, um die Dichtigkeit der Beschichtung noch zu verbessern und die Möglichkeit von chemischen Angriffen auf das Substrat einzuschränken.

Als Ausgangsverbindungen für die Beschichtung werden lösliche Alkali-Polyphosphate, Ammonium-Polyphosphate oder Alkylammonium -Polyphosphate sowie wasserlösliche Calcium, Strontium- und/oder Bariumsalze eingesetzt, für die weiteren catena-Polyphosphate auch die wasserlöslichen Salze der zweiwertigen Kationen von Cadmium, Mangan und Zink.

Natriumpolyphosphat und Ammoniumpolyphosphat sind in großtechnischen Mengen käuflich, da sie auch als Düngemittel verwendet werden. Die übrigen löslichen Alkalipolyphosphate und die Alkylammoniumpolyphosphate können aus diesen käuflichen Polyphosphaten durch Ionenaustausch oder durch Reaktion von Polyphosphorsäure mit den entsprechenden Hydroxiden bzw. Aminen hergestellt werden.

Polyphosphate der hier verwendeten Art sind unverzweigte, kettenförmige Phosphate mit dem zweifach verknüpften PO₄-Tetraeder als Grundeinheit der Kette. Ihre systematische Bezeichnung ist "catena-Polyphosphate". Natriumpolyphosphate werden großtechnisch in einer Kondensationsreaktion aus den sauren, primären Salzen der Orthophosphorsäure gewonnen. Bei dieser Kondensationsreaktion wird Wasser abgespalten, der Wasserdampfdruck über der Schmelze, Heiztemperatur, Heizdauer und die Abkühlgeschwindigkeit bestimmen die Ketttenlänge und die Kristallinität des erhaltenen Polyphosphates. Man erhält stets Mischungen mit verschiedenen Kettenlängen. Je nach Reaktionsbedingungen erhält man Produkte, die die Trivialnamen "Grahamsches Salz", "Madrellsches Salz" (NaPO₃)ₓ oder "Kurrolsches Salz" (KPO₃)ₓ führen. Das "Grahamsche Salz" ist im Gegensatz zum praktisch unlöslichen "Madrellschen Salz" und dem wenig löslichen "Kurrolschen Salz" leicht wasserlöslich und seine Verwendung im Rahmen dieser Erfindung bevorzugt. Die Kettenlänge hängt sehr empfindlich von den genauen Herstellungsbedingungen ab, sie kann von Hersteller zu Hersteller, manchmal auch von Charge zu Charge schwanken.

Die analytische Bestimmung der Kettenlängen ist zudem ziemlich aufwendig. Die Angaben über die durchschnittliche Kettenlänge in dem hier bevorzugt verwendeten Grahamschen Salz schwanken daher je nach Herkunft zwischen "12-18" und "bis 400". Hinreichend langkettige Polyphosphate unterscheiden sich in ihren chemischen Eigenschaften nur noch wenig voneinander und können deshalb alle gleichermaßen für die Erfindung verwendet werden. Eine obere Grenze für die Kettenlänge wird durch die Wasserlöslichkeit gesetzt. Die Wasserlöslichkeit nimmt mit zunehmender Kettenlänge ab und hängt auch von der Art des Kations ab.

Andere wasserlösliche Polyphosphate, die ähnlich wie das "Grahamsche Salz" hergestellt werden und als "Phosphat Glas" oder "wasserlösliches Hexametaphosphat" bezeichnet werden, können ebenfalls verwendet werden.

Für die Erfindung sind langkettige wasserlösliche Polyphosphate mit einer mittleren Kettenlänge von 80 -90 noch geeignet.

Bei kurzkettigen Polyphosphaten ändern sich die Eigenschaften der Polyphosphate in Richtung der Orthophosphate, da der Einfluß der endständigen Phosphatgrppen auf die chemischen Eigenschaften größer wird. Kurzkettige Polyphosphate mit einer Kettenlänge < 3 sind für die vorliegende Erfindung nicht geeignet.

Als wasserlösliche Calcium-, Strontium- Barium-, Cadmium-Mangan- oder Zinksalze können insbesondere deren Nitrate, Acetate oder Perchlorate eingesetzt werden.

Als wasserlösliche Zink- und Cadmiumsalze eignen sich deren Halogenide, insbesondere Chloride, und deren Sulfate, Nitrate oder Acetate. Diese Zink- und Cadmiumverbindungen werden einzeln oder gemeinsam in Wasser gelöst. Die Konzentration der Zink- oder Cadmiumsalze in der Lösung kann 0,01 bis 1 Mol/l betragen.

Zur Herstellung der Beschichtungslösung werden ein oder mehrere wasserlösliche catena-Polyphosphate einzeln oder gemeinsam in Wasser gelöst. Die Konzentration des Polyphosphates in der wässrigen Lösung kann je nach Kettenlänge und Kation 0,5 bis 10 Gew.-% betragen.

Üblicherweise wird als Lösungsmittel Wasser verwendet. Ein Anteil von 20 bis 90 Gew.-% eines organischen Lösungsmittels wie Ethanol, Methanol, Aceton usw. fordert zwar besondere Vorsichtsmaßnahmen, verbessert aber die Abscheidung der Polyphosphate. In solchen wässrig-organischen Lösungsmittelgemischen sind catena-Polyphosphate mit organischen quaternären Ammoniumionen wie Tetramethylammonium-Polyphosphat und Tetrabutylammonium-Polyphosphat noch sehr gut löslich. Alternativ dazu kann die Löslichkeit von Natrium-Polyphosphaten in solchen Lösungsmittelgemischen durch Zugabe von quartenären Ammoniumsalzen wie Tetramethylammoniumnitrat erhöht werden.

In diese Lösung wird der zu beschichtende Leuchtstoff 10 bis 30 min dispergiert.

Weiterhin wird eine Lösung eines wasserlöslichen Calcium-, Strontium-, Barium,- Cadmium-, Mangan- und/oder Zinksalzes in Wasser in einer Konzentration von 1 bis 15 Gew.-% hergestellt.

Unter ständiger Kontrolle des pH-Wertes wird diese Lösung zu der Leuchtstoff-suspension hinzugefügt. Der pH-Wert muß im neutralen bis basischen Bereich, bevorzugt bei einem p-H-Wert zwischen 9,5 und 11,5 bleiben, wozu nötigenfalls Natronlauge oder Ammoniak zudosiert wird.

Diese Suspension wird noch 1-5 h weiter gerührt, um die kolloidale Beschichtung irreversibel zu altern.

Danach wird der beschichtete Leuchtstoff von der überschüssigen Beschichtungslösung abgetrennt, mit einer Waschflüssigkeit, z.B. Alkohol/Wasser, gewaschen und bei 100-150°C getrocknet.

Durch dieses Verfahren wird eine mechanisch und chemisch sehr beständige Beschichtung erhalten, die fest an dem Substrat haftet.

Die so hergestellte Beschichtung hat eine Schichtdicke von ca. 10 nm. Durch ESCA- Messungen läßt sich feststellen, daß die Beschichtung die Leuchtstoffsubstrate vollkommen abdeckt, obwohl es für die Erfindung nicht wesentlich ist, daß die Beschichtung die Substratpartikel absolut dicht umschließt.

Die Beschichtung ist hydrophil und ist gut kompatibel mit den üblichen Beschichtungen, sodaß es als Grundschicht für weitere Beschichtungen geeignet ist, die anschließend noch aufgebracht werden können, um die Pulvereigenschaften oder die Farbwerte des Werkstoffes zu verbessern.

Die Beschichtung selber zeigt keine Degradation. Insgesamt wird die Lebensdauer des Werkstoffes durch die Beschichtung, wie sich durch ALT-Tests zeigen läßt, um den Faktor 5-10 gesteigert.

Besonders vorteilhaft ist es, wenn die Beschichtung zusätzlich SiO₂ enthält. Diese SiO₂-Beschichtung kann im Gemisch mit der Erdalkalimetall- catena-Polyphosphatbeschichtung vorliegen oder sie kann getrennt als Deckschicht auf diese Beschichtung aufgebracht werden. Durch die Beschichtung mit SiO₂ wird die Fliessfähigkeit des Pulvers weiter erhöht.

Je nachdem welches Verfahren zur Herstellung der lumineszieren Schirme angewendet wird, werden die beschichteten Leuchtstoffzusammensetzungen entweder "trocken", d.h. als trockenes Pulver oder "naß", d.h. suspendiert in einem Photoresist, eingesetzt. Beim Einsatz in einem "Naßverfahren" braucht das Leuchtstoffpulver nach dem Beschichten nicht als trockenes Pulver isoliert zu werden, sondern wird gleich in Lösung weiterverarbeitet. Anstatt den Leuchtstoff von der überschüssigen Beschichtungslösung abzutrennen, mit einer Waschflüssigkeit zu waschen und anschließend zu trocknen, wird dem in der Beschichtungslösung suspendierten Leuchtstoff ein Photoresist zugesetzt, die Leuchtstoff/Resist-Suspension als Film auf einem Substrat aufgebracht, getrocknet, durch eine Schattenmaske belichtet und die nicht belichteten Partien durch Waschen entfernt.

### Ausführungsbeispiel 1

### (catena-Calcium-Polyphosphat)

41 g Grahamsches Salz (Merck) werden in 5000 ml Wasser eingerührt, zur Lösung eine Stunde gerührt und dann durch eine G3-Fritte (Schott) filtriert. 2000 g ZnS:Ag-Leuchtstoff werden in obiger Lösung suspendiert und 20 min gerührt. Gleichzeitig werden 56,7 g Ca(NO₃)₂.4H₂O in 4800 ml Wasser gelöst und die Lösung mit 200 ml 1-molarer Ammoniaklösung versetzt. Diese ammoniakalische Calciumsalzlösung wird zu der Leuchtstoffsuspension gegeben. Nach zweistündigem Rühren läßt man den beschichteten Leuchtstoff sedimentieren und zentrifugiert die überstehende Lösung ab. Man wäscht mehrmals mit einem 1:1-Gemisch aus Wasser und Aceton, dann mit reinem Aceton und trocknet die Leuchtstoffzusammensetzung bei 100°C.

Der so beschichtete Leuchtstoff wird von der Lösung abzentrifugiert, zweimal mit einer verdünnten Natronlauge mit pH 11,0, dann mit Aceton gewaschen und bei 140°C getrocknet.

### Ausführungsbeispiel 2

### (catena-Strontium-Polyphosphat)

16,8 g Polyphosphorsäure (96 Gew.-%, Merck) werden mit 200 ml auf 5°C gekühlter 1-molarer Ammoniaklösung versetzt und gerührt. Sobald der pH-Wert unter pH 6 fällt, wird konzentrierte Ammoniaklösung tropfenweise zugegeben, so daß nach vollständiger Auflösung der Polyphosphorsäure der pH-Wert der Lösung bei pH 7 liegt. Anschließend wird die Lösung mit Wasser auf 2500 ml aufgefüllt.

1000 g ZnS:Ag-Leuchtstoff werden in obiger Lösung suspendiert und 20 min gerührt. Gleichzeitig werden 0.150 molSr(NO₃)₂ in 2400 ml Wasser gelöst und die Lösung mit 13-molarer Ammoniaklösung auf pH 11.9 eingestellt. Die basische Strontiumsalzlösung wird zu der Leuchtstoffsuspension getropft, wobei durch Zugabe von Ammoniumhydroxid-Lösung der pH-Wert der Suspension zwischen 6.9 und 7.5 gehalten wird. Nach einstündigen Rühren laßt man den beschichteten Leuchtstoff sedimentieren und trennt die überstehende Lösung ab. Man wäscht mehrmals mit einem 1:1-Gemisch aus Wasser und Aceton, dann mit Aceton und trocknet die Leuchtstoffzusammensetzung bei 100°C.

### Ausführungsbeispiel 3

### (catena-Barium-Polyphosphat)

8.4 g Polyphosphorsäure (96 Gew.-%, Merck) werden mit 100 ml auf 5°C gekühlter 1-molarer Tetramethylammoniumhydroxid-Lösung versetzt und gerührt. Sobald der pH-Wert unter pH 6 fällt, wird 25%ige Tetramethylammoniumhydroxid-Lösung tropfenweise zugegeben, so daß nach vollständiger Auflösung der Polyphosphorsäure der pH-Wert der Lösung bei pH 7 liegt. Anschließend wird die Lösung mit Wasser auf 410 ml aufgefüllt.

500 g ZnS:Ag-Leuchtstoff werden in obiger Lösung suspendiert, 20 min gerührt, und die Suspension mit Tetramethylammoniumhydroxid-Lösung auf pH 7.3 eingestellt. Gleichzeitig werden 0.075 mol Ba(NO₃)₂ in 300 ml Wasser gelöst und die Lösung mit 25%iger Tetramethylammoniumhydroxid-Lösung (25 Gew.-% in Wasser) auf pH 12.2 eingestellt.

Die basische Bariumsalzlösung wird zu der Leuchtstoffsuspension getropft, wobei durch Zugabe von Tetramethylammoniumhydroxid-Lösung der pH-Wert der Suspension zwischen 6.8 und 7.5 gehalten wird. Nach kurzem Rühren läßt man den beschichteten Leuchtstoff sedimentieren und trennt die überstehende Lösung ab. Man wäscht mehrmals mit einem 1:1-Gemisch aus Wasser und Aceton, dann mit Aceton und trocknet das Leuchtstoffpulver bei 100°C.

### Ausführungsbeispiel 4

### (Calcium-Tripolyphosphat)

0.04 Mol Na₅P₃O₁₀ werden in 4000 ml Wasser gelöst. In diese Lösung werden 1000 g ZnS:Ag-Leuchtstoff unter Rühren eingebracht und mit Ultraschall dispergiert. 1000 ml einer wässrigen 0.1 molaren Ca(NO₃)₂-Lösung werden mit 2000 ml Wasser versetzt. Dann wird 1-molare Natronlauge zugegeben bis pH 11.2 erreicht ist. Diese Calciumnitratlösung wird innerhalb einer Stunde zu der Leuchtstoff-suspension getropft.

Das beschichtete Leuchtstoffpulver wird abzentrifugiert, mehrmals mit einem 1:1-Gemisch aus Wasser und Aceton gewaschen und bei 120°C getrocknet.

### Ausführungsbeispiel 5

### (catena-Calcium-Strontium-Polyphosphat)

16.8 g Polyphosphorsäure (96 Gew.-%, Merck) werden mit 200 ml auf 5°C gekühlter 1-molarer Lithiumhydroxid-Lösung versetzt und gerührt. Sobald der pH-Wert unter pH 6 fällt, wird Lithiumhydroxid-Lösung tropfenweise zugegeben. so daß nach vollständiger Auflösung der Polyphosphorsäure der pH-Wert der Lösung bei pH 7 liegt. Anschließend wird die Lösung mit Wasser auf 2500 ml aufgefüllt.

1000 g ZnS:Ag-Leuchtstoff werden in obiger Lösung suspendiert und 20 min gerührt. Gleichzeitig werden 0.075 MolSr(NO₃)₂ und 0.075 Mol Ca(NO₃)₂.4H₂O in 2400 ml Wasser gelöst und Lösung mit Lithiumhydroxid-Lösung auf pH 11.9 eingestellt. Die basische Strontium-/Calciumsalzlösung wird zu der Leuchtstoffsuspension getropft, wobei durch Zugabe von Lithiumhydroxid-Lösung der pH-Wert der Suspension zwischen 6.9 und 7.5 gehalten wird. Nach einstündigem Rühren läßt man den beschichteten Leuchtstoff sedimentieren und trennt die überstehende Lösung ab. Man wäscht mehrmals mit einem 1:1-Gemisch aus Wasser und Aceton, dann mit Aceton und trocknet die Leuchtstoffzusammensetzung bei 100°C.

### Ausführungsbeispiel 6

### (catena-Calcium-Barium-Polyphosphat)

8.4 g Polyphosphorsäure (96 Gew.-%, Merck) werden mit 100 ml auf 5°C gekühlter 1-molarer Tetrabuthylammoniumhydroxid-Lösung versetzt und gerührt. Sobald der pH-Wert unter pH 6 fällt, wird 1-molare Tetrabuthylammoniumhydroxid-Lösung tropfenweise zugegeben, so daß nach vollständiger Auflösung der Polyphosphorsäure der pH-Wert der Lösung bei pH 7 liegt. Anschließend wird die Lösung mit Wasser auf 410 ml aufgefüllt. 500 g ZnCdS:Ag-Leuchtstoff werden in obiger Lösung suspendiert, 20 min gerührt, und die Suspension mit Tetrabutyl-ammoniumhydroxid-Lösung auf pH 7.3 eingestellt. Gleichzeitig werden 0.50 Mol Ca(NO₃)₂ 4H₂O und 0.025 mol Ba(NO₃)₂ in 300 ml Wasser gelöst und die Lösung mit Tetrabutylammoniumhydroxid-Lösung (40 Gew.-% in Wasser) auf pH 12.2 eingestellt.

Die basische Calcium-/Bariumsalzlösung wird zu der Leuchtstoffsuspension getropft, wobei durch Zugabe von Tetrabutylammoniumhydroxid-Lösung der pH-Wert der Suspension zwischen 7.0 und 7.3 gehalten wird. Nach kurzem Rühren läßt man den beschichteten Leuchtstoff sedimentieren und trennt die überstehende Lösung ab. Man wäscht mehrmals mit einem 1:1-Gemisch aus Wasser un Aceton, dann mit Aceton und trocknet die Leuchtstoffzusammensetzung bei 100°C.

### Ausführungsbeispiel 7

### (catena-Calcium-Polyphosphat mit Cadmium-Polyphosphat)

8.4 g Polyphosphorsäure (96 Gew.-%. Merck) werden mit 100 ml auf 5°C gekühlter 1-molarer Ammoniumhydroxid-Lösung versetzt und gerührt. Sobald der pH-Wert unter pH 6 fällt, wird 1-molare Ammoniumhydroxid-Lösung zugegeben, so daß nach vollständiger Auflösung der Polyphosphorsäure der pH-Wert der Lösung bei pH 7 liegt. Anschließend wird die Lösung mit Wasser auf 410 ml aufgefüllt. 500 g ZnCdS:Ag-Leuchtstoff werden in obiger Lösung suspendiert, 20 min gerührt, und die Suspension mit Ammoniumhydroxid-Lösung auf pH 7.3 eingestellt.

Gleichzeitig werden 0.065 Mol Ca(NO₃)₂·4H₂O und 0.010 mol Cd(NO₃)₂ in 300 ml Wasser gelöst und die Lösung mit 25%iger Ammoniumhydroxid-Lösung auf pH 12.2 eingestellt. Die basische Calcium-/Cadmiumsalzlösung wird zu der Leuchtstoffsuspension getropft, wobei durch Zugabe von Ammoniumhydroxid-Lösung der pH-Wert der Suspension zwischen 7.0 und 7.3 gehalten wird. Nach kurzem Rühren läßt man den beschichteten Leuchtstoff sedimentieren und trennt die überstehende Lösung ab. Man wäscht mehrmals mit einem 1:1-Gemisch aus Wasser und Aceton, dann mit Aceton und trocknet die Leuchtstoffzusammensetzung bei 100°C.

### Ausführungsbeispiel 8

### (catena-Strontium-Barium-Polyphosphat)

16.8 g Polyphosphorsäure (96 Gew.-%, Merck) werden mit 200 ml auf 5°C gekühlter 1-molarer Kaliumhydroxid-Lösung versetzt und gerührt. Sobald der pH-Wert unter pH 6 fällt, wird Kaliumhydroxid-Lösung tropfenweise zugegeben, so daß nach vollständiger Auflösung der Polyphosphorsäure der pH-Wert der Lösung bei pH 7 liegt. Anschließend wird die Lösung mit Wasser auf 2500 ml aufgefüllt. 1000 g ZnS:Cu-Leuchtstoff werden in obiger Lösung suspendiert und 20 min gerührt. Gleichzeitig werden 0.075 Mol Sr(NO₃)₂ und 0.075 Mol Ba(NO₃)₂ in 2400 ml Wasser gelöst und die Lösung mit 13-molarer Ammoniaklösung auf pH 11.9 eingestellt. Die basische Strontium-/Bariumsalzlösung wird zu der Leuchtstoff-suspension getropft, wobei durch Zugabe von Kaliumhydroxid-Lösung der pH-Wert der Suspension zwischen 7.0 und 7.3 gehalten wird. Nach einstündigen Rühren läßt man den beschichteten Leuchtstoff sedimentieren und trennt die überstehende Lösung ab. Man wäscht mehrmals mit einem 1:1-Gemisch aus Wasser und Aceton, dann mit Aceton und trocknet die Leuchtstoffzusammensetzung bei 100°C.

### Ausführungsbeispiel 9

### (catena-Calcium-Strontium-Barium-Polyphosphat)

40 g "Phosphate Glass" (Sigma) werden in 5000 ml deionisiertem Wasser eingerührt, zur Lösung eine Stunde gerührt und dann durch eine G3 Fritte (Schott) filtriert. 2000 g ZnS:Cu-Leuchtstoff werden in obiger Lösung suspendiert und 20 min gerührt. Gleichzeitig werden 18.9 g Ca(NO₃)₂·4H₂O, 16.9 g Sr(NO₃)₂ und 20.9 g Ba(NO₃)₂ in 4800 ml Wasser gelöst und die Lösung mit 200 ml 1-molarer Natronlauge versetzt. Die basische Calcium-Strontium-Bariumsalzlösung wird zu der Leuchtstoffsuspension gegeben. Nach zweistündigen Rühren läßt man den beschichteten Leuchtstoff sediementieren und trennt die überstehende Lösung ab. Man wäscht mehrmals mit einem 1:1-Gemisch aus Wasser und Aceton, dann mit Aceton und trocknet die Leuchtstoffzusammensetzung bei 100°C.

### Ausführungsbeispiel 10

8.4g Polyphosphorsäure (96 Gew.-%, Merck) werden mit 100 ml auf 5°C gekühlter 1-molarer Tetramethylammoniumhydroxid-Lösung versetzt und gerührt. Sobald der pH-Wert unter pH 6 fällt, wird 25%ige Tetramethylammoniumhydroxid-Lösung tropfenweise zugegeben, so daß nach vollständiger Auflösung der Polyphosphorsäure der pH-Wert der Lösung bei pH 7 liegt. Anschließend wird die Lösung mit 300 ml Ethanol versetzt. 500 g ZnS_{0.9}Se_{0.1}:Ag-Leuchtstoff werden in obiger Lösung suspendiert. 20 min gerührt, und die Suspension mit Tetramethylammonium-hydroxid-Lösung auf pH 7.3 eingestellt. Gleichzeitig werden 0.075 Mol Ca(NO₃)₂ in 75 ml Wasser gelöst, mit 225 ml Ethanol versetzt und die Lösung mit 25 % iger Teramethylammoniumhydroxid-Lösung (25 Gew.-% in Wasser) auf pH 11.2 eingestellt. Die basische Calciumsalzlösung wird zu der Leuchtstoffsuspension getropft, wobei durch Zugabe von Tetramethylammoniumhydroxid-Lösung der pH-Wert der Suspension zwischen 6.8 und 7.5 gehalten wird. Nach kurzem Rühren läßt man den beschichteten Leuchtstoff sedimentieren und trennt die überstehende Lösung ab. Man wäscht mehrmals mit einem 1:3-Gemisch aus Wasser und Ethanol, dann mit Ethanol und trocknet die Leuchtstoffzusammensetzung bei 100°C.

### Ausführungsbeispiel 11

### (Deckschicht mit SiO₂)

500 g Leuchtstoff nach Ausführungsbeispiel 1 bis 10 werden in einem Gemisch 3300 ml Ethanol, 525 ml Wasser und 625 ml 4-molarer Ammoniak-Lösung dispergiert. Unter starkem Rühren werden 50 ml einer 0.34-molaren Lösung von Tetraethoxysilan in Ethanol zur Leuchtstoffsuspension gegeben und 12 Stunden bei 20 bis 50°C gerührt. Die Suspension wird anschließend filtriert, der Leuchtstoff mit einem 1:1 Gemisch aus Wasser und Ethanol gewaschen und schließlich getrocknet.

### Ausführungsbeispiel 12

### (Deckschicht mit SiO₂)

1000 g Leuchtstoff nach Ausführungsbeispiel 1 bis 10 werden in 7.5 Liter eines 1:1 Gemisches aus Wasser und Aceton eingerührt und die Suspension mit 20 ml einer kolloidalen Kieselsäurelösung (Ludox® AS-40, Du Pont, 40% in Wasser auf SiO₂ bezogen) versetzt. Der pH-Wert der Lösung soll bei 6 liegen und wird nötigenfalls mit H₂SO₄ nachgestellt. Anschließend wird die Suspension 12 Stunden gerührt. Die Suspension wird danach filtriert, der Leuchtstoff mit einem 1:1 Gemisch aus Wasser und Aceton gewaschen und schließlich getrocknet.

### Ausführungsbeispiel 13

### (Leuchtstoff mit Pigmentschicht)

16.8 g Polyphosphorsäure (96 Gew.-%, Merck) werden mit 200 ml auf 5°C gekühlter 1-molarer Ammoniaklösung versetzt und gerührt. Sobald der pH-Wert unter pH 6 fällt, wird konzentrierte Ammoniaklösung tropfenweise zugegeben, so daß nach vollständiger Auflösung der Polyphosphorsäure der pH-Wert der Lösung bei pH 7 liegt. Anschließend wird die Lösung mit Wasser auf 2500 ml aufgefüllt. 1000 g blauleuchtender ZnS:Ag-Leuchtstoff werden in obiger Lösung suspendiert und 20 min gerührt. Gleichzeitig werden 0.150 mol Ca(NO₃)₂ in 2400 ml Wasser gelöst und die Lösung mit 13-molarer Ammoniaklösung auf pH 11.9 eingestellt.

Die basische Calziumsalzlösung wird zu der Leuchtstoffsuspension getropft, wobei durch Zugabe von Ammoniumhydroxid-lösung der pH-Wert der Suspension zwischen 6.9 und 7.5 gehalten wird. 200 g CoAl₂O₄-Pigment werden in 500 ml Wasser suspendiert und die Pigment-Suspension zusammen mit Mahlkugeln aus yttriumstabilisiertem ZrO₂ in eine Rührwerkskugelmühle gegeben. Nach zweistündigem Mahlen bei 750 U/min werden 25 ml der Pigment-Suspension zur Leuchtstoff-suspension gegeben. Sofort anschließend werden eine Lösung von 4.0 g eines Latex (Neocryl A550®,ICI, 40% in Wasser) in 56 ml Wasser zur Suspension gegeben und eine Stunde gerührt. Danach wird die Beschichtungsreaktion durch Zugabe von 50 ml 1-molarer NH₄NO₃-Lösung eingeleitet. Die Suspension wird danach filtriert, der Leuchtstoff mit einem 1:1 Gemisch aus Wasser und Ethanol gewaschen und schließlich 24 Stunden bei 50°C getrocknet.

### Ausführungsbeispiel 14

### (Leuchtstoff mit Pigmentschicht)

16.8 g Polyphosphorsäure (96 Gew.-%, Merck) werden mit 200 ml auf 5 °C gekühlter 1-molarer Ammoniaklösung verstzt und gerührt. Sobald der pH-Wert unter pH 6 fällt. wird konzentrierte Ammoniaklösung tropfenweise zugegeben, so daß nach vollständiger Auflösung der Polyphosphorsäure der pH-Wert der Lösung bei pH 7 liegt. Anschließend wird die Lösung mit Wasser auf 2500 ml aufgefüllt. 1000 g rotleuchtender ZnCdS:Ag-Leuchtstoff werden in obiger Lösung suspendiert und 20 min gerührt. Gleichzeitg werden 0.150 mol Sr(NO₃)₂ in 2400 ml Wasser gelöst und die Lösung mit 13-molarer Ammoniaklösung auf pH 11.9 eingestellt. Die basische Strontiumsalzlösung wird zu der Leuchtstoffsuspension getropft. wobei durch Zugabe von Ammoniumhydroxid-Lösung der pH-Wert der Suspension zwischen 6.9 und 7.5 gehalten wird.

200 g rotes Fe₂O₃-Pigment werden in 500 ml Wasser suspendiert und die Pigment-Suspension zusammen mit Mahlkugeln aus yttriumstabilisiertem ZrO₂ in eine Rührwerkskugelmühle gegeben. Nach zweistündigem Mahlen bei 750 U/min werden 25 ml der Pigment-Suspension zur Leuchtstoffsuspension gegeben. Sofort anschließend werden eine Lösung von 4.0 g eines Latex (Neocryl A550®, ICI, 40 % in Wasser) in 56 ml Wasser zur Suspension gegeben und eine Stunde gerührt. Danach wird die Beschichtungsreaktion durch Zugabe von 50 ml 1-molarer NH₄NO₃-Lösung eingeleitet. Die Suspension wird danach filtriert, der Leuchtstoff mit einem 1:1 Gemisch aus Wasser und Ethanol gewaschen und schließlich 24 Stunden bei 50 °C getrocknet.

### Ausführungsbeispiel 15

### (Cadmiumpolyphosphat)

300g Grahamsches Salz (Merck) werden in 5000 ml Wasser eingerührt, zur Lösung eine Stunde gerührt und dann durch eine G3-Fritte (Schott) filtriert. 1000g ZnS:Ag-Leuchtstoff werden in obiger Lösung suspendiert, die Suspension mit 1 molarer Schwefelsäure auf pH-Wert 2,6 eingestellt und 15 min gerührt. Durch Zugabe von 1 molarer Natronlauge wird der pH-Wert der Suspension auf pH 11,4 erhöht. Sofort anschließend werden portionsweise 2500 ml einer 0,1 molaren CdSO₄-Lösung zugegeben, gleichzeitig wird durch entsprechende Zugabe von 1 molarer Natronlauge der pH-Wert während der Cadmiumsulfat-Zugabe auf einem Wert zwischen 9,5 und 11,4 gehalten. Am Ende der Reaktion soll der pH-Wert der Suspension 11,0 betragen. Der so beschichtete Leuchtstoff wird von der Lösung ebzentrifugiert, zweimal mit einer verdünnten Natronlauge mit pH 11,0, dann mit Aceton gewaschen und bei 140°C getrocknet.

### Ausführungsbeispiel 16

### (Cadmiumpolyphosphat)

8,4 g Polyphosphorsäure (96 Gew.-%, Merck) werden mit 100 ml auf 5°C gekühlter 1-molarer Tetramethylammoniumhydroxidlösung versetzt und gerührt. Sobald der pH-Wert unter pH 6 fällt, wird 25%ige Tetramethylammoniumlösung tropfenweise zuegeben, so daß nach vollständiger Auflösung der Polyphosphorsäure der pH-Wert der Lösung bei pH 7 liegt. Anschließend wird die Lösung mit 310 ml Wasser versetzt. 500 g rotleuchtender ZnCdS:Ag-Leuchtstoff werden in obiger Lösung suspendiert, 20 min gerührt und die Suspension mit Tetramethylammoniumhydroxidlösung auf pH 7.3 eingestellt. Gleichzeitig werden 0.075 mol Cd(NO₃)₂ in 300 ml Wasser gelöst. Die Cadmiumsalzlösung wird zu der Leuchtstoffsuspension getropft, wobei durch Zugabe von Tetramethylammoniumhydroxidlösung der pH-Wert der Suspension zwischen 6.8 und 7.5 gehalten wird. Nach kurzem Rühren läßt man den beschichteten Leuchtstoff sedimentieren und trennt die überstehende Lösung ab. Man wäscht mehrmals mit einem 1:1-Gemisch aus Wasser und Ethanol, dann mit Ethanol und trocknet die Leuchtstoffzusammensetzung bei 100°C.

### Ausführungsbeispiel 17

### (Cadmiumpolyphosphat)

8,4 g Polyphosphorsäure (96 Gew.-%, Merck) werden mit 100 ml auf 5°C gekühlter 1-molarer Tetramethylammoniumhydroxidlösung versetzt und gerührt. Sobald der pH-Wert unter pH 6 fällt, wird 25%ige Tetramethylammoniumlösung tropfenweise zuegeben, so daß nach vollständiger Auflösung der Polyphosphorsäure der pH-Wert der Lösung bei pH 7 liegt. Anschließend wird die Lösung mit 300 ml Ethanol versetzt. 500 g ZnS_{0.9}Se_{0.1}:Ag-Leuchtstoff werden in obiger Lösung suspendiert, 20 min gerührt und die Suspension mit Tetramethylammoniumhydroxidlösung auf pH 7.3 eingestellt. Gleichzeitig werden 0.075 mol Cd(ClO₄)₂ in 75 ml Wasser gelöst und die Lösung mit 225 ml Ethanol versetzt. Die Cadmiumsalzlösung wird zu der Leuchtstoffsuspension getropft, wobei durch Zugabe von Tetramethylammoniumhydroxidlösung der pH-Wert der Suspension zwischen 6.8 und 7.5 gehalten wird. Nach kurzem Rühren läßt man den beschichteten Leuchtstoff sedimentieren und trennt die überstehende Lösung ab. Man wäscht mehrmals mit einem 1:3-Gemisch aus Wasser und Ethanol, dann mit Ethanol und trocknet die Leuchtstoffzusammensetzung bei 100°C.

### Ausführungsbeispiel 18

### (Zinkpolyphosphat)

600 g Phosphat Glas (Fm.Sigma) werden in 5000 ml Wasser gelöst. In diese Lösung werden 500 g ZnS:Cu-Leuchtstoff unter Rühren eingebracht und mit Ultraschall dispergiert. Der pH-Wert der Lösung wird mit 1 molarer Salpetersäure auf den Wert 3 gebracht und die Lösung dann 15 min gerührt. Dann wird 1 molare Natronlauge zugegeben bis pH 5,8 erreicht ist. Sofort anschließend werden portionsweise 5000 ml einer 0,1 molaren Zn(NO₃)₂-Lösung zugegeben, gleichzeitig wird durch entsprechende Zugabe von 1 molarer Natronlauge der pH-Wert während der Zinknitrat-Zugabe auf einem Wert zwischen 5,8 und 6,1 gehalten. Am Ende der Reaktion soll der pH-Wert der Suspension 6,1 betragen. Die Suspension wird mit 1000ml Aceton versetzt und im so erhaltenen Wasser-Aceton-Gemisch 5 min gerührt. Anschließend wird das beschichtete Leuchtstoffpulver abfiltriert und bei 120°C getrocknet.

### Ausführungsbeispiel 19

### (Zinkpolyphosphat)

8,4 g Polyphosphorsäure (96 Gew.-%, Merck) werden mit 100 ml auf 5°C gekühlter 1-molarer Tetramethylammoniumhydroxidlösung versetzt und gerührt. Sobald der pH-Wert unter pH 6 fällt, wird 25%ige Tetramethylammoniumlösung tropfenweise zuegeben, so daß nach vollständiger Auflösung der Polyphosphorsäure der pH-Wert der Lösung bei pH 7 liegt. Anschließend wird die Lösung mit 30 ml Wasser versetzt. 500 g ZnS:Cu-Leuchtstoff werden in obiger Lösung suspendiert, 20 min gerührt und die Suspension mit Ammoniumhydroxidlösung auf pH 7.3 eingestellt. Gleichzeitig werden 0.075 mol Zn(NO₃)₂ in 300 ml Wasser gelöst.

Die Zinksalzlösung wird zu der Leuchtstoffsuspension getropft, wobei durch Zugabe von Ammoniumhydroxidlösung der pH-Wert der Suspension zwischen 6.8 und 7.5 gehalten wird. Nach kurzem Rühren läßt man den beschichteten Leuchtstoff sedimentieren und trennt die überstehende Lösung ab. Man wäscht mehrmals mit einem 1:1-Gemisch aus Wasser und Ethanol, dann mit Ethanol und trocknet die Leuchtstoffzusammensetzung bei 100°C.

### Ausführungsbeispiel 20

### (Deckschicht mit SiO₂)

500 g Leuchtstoff nach Ausführungsbeispiel 15 bis 17 werden in einem Gemisch 3300 ml Ethanol, 525 ml Wasser und 625 ml 4-molarer Ammoniak-Lösung dispergiert.

Unter starkem Rühren werden 50 ml einer 0.34-molaren Lösung von Tetraethoxysilan in Ethanol zur Leuchtstoffsuspension gegeben und 12 Stunden bei 20 bis 50°C gerührt. Die Suspension wird anschließend filtriert, der Leuchtstoff mit einem 1:1 Gemisch aus Wasser und Ethanol gewaschen und schließlich getrocknet.

### Ausführungsbeispiel 21

### (Deckschicht mit SiO₂)

1000 g Leuchtstoff nach Ausführungsbeispiel 15 bis 19 werden in 7.5 Liter eines 1:1 Gemisches aus Wasser und Aceton eingerührt und die Suspension mit 20 ml einer kolloidalen Kieselsäurelösung (Ludox® AS-40, Du Pont, 40% in Wasser auf SiO₂ bezogen) versetzt. Der pH-Wert der Lösung soll bei 6 liegen und wird nötigenfalls mit H₂SO₄ nachgestellt. Anschließend wird die Suspension 12 Stunden gerührt. Die Suspension wird danach filtriert, der Leuchtstoff mit einem 1:1 Gemisch aus Wasser und Aceton gewaschen und schließlich getrocknet.

### Ausführungsbeispiel 22

### (Leuchtstoff mit Pigmentschicht)

16.8 g Polyphosphorsäure (96 Gew.-%, Merck) werden mit 200 ml auf 5°C gekühlter 1-molarer Ammoniaklösung versetzt und gerührt. Sobald der pH-Wert unter pH 6 fällt, wird konzentrierte Ammoniaklösung tropfenweise zugegeben, so daß nach vollständiger Auflösung der Polyphosphorsäure der pH-Wert der Lösung bei pH 7 liegt. Anschließend wird die Lösung mit Wasser auf 2500 ml aufgefüllt.

1000 g blauleuchtender ZnS:Ag-Leuchtstoff werden in obiger Lösung suspendiert und 20 min gerührt. Gleichzeitig werden 0.150 mol Cd(NO₃)₂ in 2400 ml Wasser gelöst. Die basische Cadmiumsalzlösung wird zu der Leuchtstoffsuspension getropft, wobei durch Zugabe von Ammoniumhydroxid-lösung der pH-Wert der Suspension zwischen 6.9 und 7.5 gehalten wird.

200 g CoAl₂O₄-Pigment werden in 500 ml Wasser suspendiert und die Pigment-Suspension zusammen mit Mahlkugeln aus yttriumstabilisiertem ZrO₂ in eine Rührwerkskugelmühle gegeben. Nach zweistündigem Mahlen bei 750 U/min werden 25 ml der Pigment-Suspension zur Leuchtstoffsuspension gegeben. Sofort anschließend werden eine Lösung von 4.0 g eines Latex (Neocryl A550®,ICI, 40% in Wasser) in 56 ml Wasser zur Suspension gegeben und eine Stunde gerührt. Danach wird die Beschichtungsreaktion durch Zugabe von 50 ml 1-molarer NH₄NO₃-Lösung eingeleitet. Die Suspension wird danach filtriert, der Leuchtstoff mit einem 1:1 Gemisch aus Wasser und Ethanol gewaschen und schließlich 24 Stunden bei 50°C getrocknet.

### Ausführungsbeispiel 23

### (Leuchtstoff mit Pigmentschicht)

16.8 g Polyphosphorsäure (96 Gew.-%, Merck) werden mit 200 ml auf °C gekühlter 1-molarer Ammoniaklösung versetzt und gerührt. Sobald der pH-Wert unter pH 6 fällt, wird konzentrierte Ammoniaklösung tropfenweise zugegeben, so daß nach vollständiger Auflösung der Polyphosphorsäure der pH-Wert der Lösung bei pH 7 liegt. Anschließend wird die Lösung mit Wasser auf 2500 ml aufgefüllt. 1000 g rotleuchtender ZnCdS:Ag-Leuchtstoff werden in obiger Lösung suspendiert und 20 min gerührt. Gleichzeitg werden 0.150 mol Zn(NO₃)₂ in 2400 ml Wasser gelöst. Die Zinksalzlösung wird zu der Leuchtstoffsuspension getropft, wobei durch Zugabe von Ammoniumhydroxid-Lösung der pH-Wert der Suspension zwischen 6.9 und 7.5 gehalten wird.

200 g rotes Fe₂O₃-Pigment werden in 500 ml Wasser suspendiert und die Pigment-Suspension zusammen mit Mahlkugeln aus yttriumstabilisiertem ZrO₂ in eine Rührwerkskugelmühle gegeben. Nach zweistündigem Mahlen bei 750 U/min werden 25 ml der Pigment-Suspension zur Leuchtstoffsuspension gegeben. Sofort anschließend werden eine Lösung von 4.0 g eines Latex (Neocryl A550®, ICI, 40 % in Wasser) in 56 ml Wasser zur Suspension gegeben und eine Stunde gerührt. Danach wird die Beschichtungsreaktion durch Zugabe von 50 ml 1-molarer NH₄NO₃-Lösung eingeleitet. Die Suspension wird danach filtriert, der Leuchtstoff mit einem 1:1 Gemisch aus Wasser und Ethanol gewaschen und schließlich 24 Stunden bei 50 °C getrocknet.

### Ausführungsbeispiel 24

### (Flachbildschirm-Naßverfahren)

125.3 g Polyphosphorsäure (96 Gew.-%, Merck) werden mit 1500 ml auf 5° C gekühlter 1-molarer Ammoniaklösung versetzt und gerührt. Sobald der pH-Wert unter pH 6 fällt, wird konzentrierte Ammoniaklösung tropfenweise zugegeben, so daß nach vollständiger Auflösung der Polyphosphorsäure der pH-Wert der Lösung bei pH 7 liegt. Anschließend wird diese Ammoniumpolyphosphat - Lösung mit Wasser auf 2500 ml aufgefüllt. 500 g blauleuchtender ZnS:Ag-Leuchtstoff werden in 167.5 ml der obigen Ammoniumpolyphosphat-Lösung und 240 ml Wasser dispergiert und die Suspension auf pH 7.3 eingestellt. Gleichzeitig werden 17.7 g Cd(NO₃)₂·4 H₂O in 150 ml Wasser gelöst und die Lösung innerhalb einer Stunde zur Leuchtstoffsuspension getropft. Während des Zutropfens wird der pH-Wert der Lösung durch tropfenweise Zugabe von Ammoniumhydroxid-Lösung zwischen pH 6.9 und 7.3 gehalten. Anschließend werden 650 g Polyvinylalkohol-Lösung (Mowiol® 40-88, Hoechst, 10 Gew.-% in Wasser) auf pH 7 eingestellt und unter Rühren zur Leuchtstoffsuspension gegeben. Schließlich werden 10 ml einer Ammoniumdi chromat-Lösung (10 Gew-% in Wasser) hinzugegeben.

500 g grünleuchtender ZnS:Cu-Leuchtstoff werden in 167.5 ml Ammoniumpolyposphat-Lösung und 240 ml Waser dispergiert und die Suspension auf pH 7.3 eingestellt. Gleichzeitig werden 17.7 g Cd(NO₃)₂·4H₂O in 150 ml Wasser gelöst und die Lösung innerhalb einer Stunde zur Leuchtstoffsuspension getropft. Während des Zutropfens wird der pH-Wert der Lösung durch tropfenweise Zugabe von Ammoniumhydroxid-Lösung zwischen pH 6.9 und 7.3 gehalten. Anschließend werden 650 g PVAL-Lösung (Mowiol®40-88, Hoechst, 10 Gew.-% in Wasser) auf pH 7 eingestellt und unter Rühren zur Leuchtstoffsuspension gegeben. Schließlich werden 10 ml einer Ammoniumdichromat-Lösung (10 Gew.-% in Wasser) hinzugegeben.

500 g rotleuchtende ZnCdS:Ag-Leuchtstoff werden in 167.5 ml Ammoniumpolyphosphat-Lösung und 240 ml Wasser dispergiert und die Suspension auf pH 7.3 eingestellt. Gleichzeitg werden 17.7 g Cd(NO₃)₂·4H₂O in 150 ml Wasser gelöst und die Lösung innerhalb einer Stunde zur Leuchtstoffsuspension getropft. Während des Zutropfens wird der pH-Wert der Lösung durch tropfenweise Zugabe von Ammoniumhydroxid-Lösung zwischen pH 6.9 und 7.3 gehalten. Anschließend werden 650 g PVAL-Lösung (Mowiol® 44-88, 10 Gew.-% in Wasser) auf pH 7 eingestellt und unter Rühren zur Leuchtstoffsuspension gegeben. Schließlich werden 10 ml einer Ammoniumdichromat-Lösung (10 Gew-% in Wasser) hinzugegeben.

Mittels einer Rakel wird eine dünne Schicht der ZnS:Ag-Suspension auf einem Flachbildschirmsubstrat aufgebracht und bei 40 °C getrocknet. Dann wird diese Schicht durch eine Lochmaske belichtet, wobei die Schicht an den belichteten Stellen wasserunlöslich wird. Anschließend wird die Schicht einer Sprühentwicklung mit Wasser unterzogen, wodurch die Schicht an den nicht belichteten Stellen entfernt wird und nur die punktförmigen Bildelemente auf dem Substrat verbleiben. Analog wird eine dünne Schicht von ZnS:Cu und ZnCdS:Ag jeweils aufgebracht, belichtet und entwickelt. Anschließend werden die organischen Bestandteile des so erhaltenen Leuchtschirmes durch Ausheizen bei Temperaturen > 400 °C entfernt.

In gleicher Art und Weise hergestellt wird als Standard ein Leuchtschirm mit drei Leuchtstoffzusammensetzungen in den Farben rot, blau und grün, die keine stabilisierende Beschichtung haben.

Diese Leuchtschirme werden einem beschleunigten Lebensdauertest (ALT) bezüglich Bildhelligkeit und Farbwertwiedergabe in Relation zur eingestrahlten Strahlungsenergiemenge einer Strahlung von 4 KV unterzogen. Während der Effizienz I/Io des Standards anfangs stark abfällt und schließlich auf einem Niveau von 20% des Ausgangswertes konstant bleibt, fällt die Bildhelligkeit des Bildschirmes mit den Leuchtstoffen nach der Erfindung nur wenig ab und bleibt bei etwa 80 % des Ausgangswertes konstant.

### Ausführungsbeispiel 25

### (Trockenverfahren)

Die beschichteten Leuchtstoffpulver nach Ausführungsbeispiel 15 bis 23 werden zur Herstellung eines Flachleuchtschirmes für eine Farbbildröhre verwendet. Dazu wird auf die Innenseite des Leuchtschirmes eine dünne lichtempfindliche Schicht, die bei Belichtung klebrig wird, aufgebracht und getrocknet. Dann wird diese Schicht durch eine Lochmaske belichtet und die belichteten klebrigen kreisförmigen Bildelemente werden mit einer Leuchtstoffzusammensetzung nach Ausführungsbeispiel 19 getont. In einer zweiten und dritten Belichtung werden jeweils andere Bereiche der lichtempfindlichen Schicht mit den Leuchtstoffzusammensetzungen nach Ausführungsbeispiel 16 und 18 getont. Anschließend wird die lichtempfindliche Schicht durch Ausheizen bei Temperaturen > 400°C entfernt.

In gleicher Art und Weise hergestellt wird als Standard ein Leuchtschirm mit drei Leuchtstoffzusammensetzungen in den Farben rot, blau und grün, die keine stabilisierende Beschichtung haben. Diese Leuchtschirme werden einem beschleunigten Lebendauertest (ALT) bezüglich Bildhelligkeit und Farbwertwiedergabe in Relation zur eingestrahlten Strahlungsenergiemenge einer Strahlung von 4 kV unterzogen. Während die Effizienz I/I₀ des Standards anfangs stark abfällt und schließlich auf einem Niveau von 20% des Ausgangswertes konstant bleibt, fällt die Bildhelligkeit des Bildschirmes mit den Leuchtstoffen nach der Erfindung nur wenig ab und bleibt bei etwa 80% des Ausgangswertes konstant.

### Ausführungsbeispiel 26

### (Flachbildschirm-Naßverfahren)

125.3 g Polyphosphorsäure (96 Gew.-%, Merck) werden mit 1500 ml auf 5° C gekühlter 1-molarer Ammoniaklösung versetzt und gerührt. Sobald der pH-Wert unter pH 6 fällt, wird konzentrierte Ammoniaklösung tropenweise zugegeben, so daß nach vollständiger Auflösung der Polyphosphorsäure der pH-Wert der Lösung bei pH 7 liegt. Anschließend wird diese Ammoniumpolyphosphat - Lösung mit Wasser auf 2500 ml aufgefüllt.

500 g blauleuchtender ZnS:Ag-Leuchtstoff werden in 167.5 ml der obigen Ammoniumpolyphosphat-Lösung und 240 ml Wasser dispergiert und die Suspension auf pH 7.3 eingestellt. Gleichzeitig werden 17.7 g Ca(NO₃)₂·4 H₂O in 150 ml Wasser gelöst und die Lösung innerhalb einer Stunde zur Leuchtstoffsuspension getropft. Während des Zutropfens wird der pH-Wert der Lösung durch tropfenweise Zugabe von Ammoniumhydroxid-Lösung zwischen pH 6.9 und 7.3 gehalten. Anschließend werden 650 g Polyvinylalkohol-Lösung (Mowiol® 40-88, Hoechst, 10 Gew.-% in Wasser) auf pH 7 eingestellt und unter Rühren zur Leuchtstoffsuspension gegeben. Schließlich werden 10 ml einer Ammoniumdichromat-Lösung (10 Gew-% in Wasser) hinzugegeben.

500 g grünleuchtender ZnS:Cu-Leuchtstoff werden in 167.5 ml Ammoniumpolyposphat-Lösung und 240 ml Waser dispergiert und die Suspension auf pH 7.3 eingestellt. Gleichzeitig werden 17.7 g Ca(NO₃)₂·4H₂O in 150 ml Wasser gelöst und die Lösung innerhalb einer Stunde zur Leuchtstoffsuspension getropft. Während des Zutropfens wird der pH-Wert der Lösung durch tropfenweise Zugabe von Ammoniumhydroxid-Lösung zwischen pH 6.9 und 7.3 gehalten. Anschließend werden 650 g PVAL-Lösung (Mowiol®40-88, Hoechst, 10 Gew.-% in Wasser) auf pH 7 eingestellt und unter Rühren zur Leuchtstoffsuspension gegeben. Schließlich werden 10 ml einer Ammoniumdichromat-Lösung (10 Gew.-% in Wasser hinzugegeben.

500 g rotleuchtende ZnCdS:Ag-Leuchtstoff werden in 167.5 ml Ammoniumpolyphosphat-Lösung und 240 ml Wasser dispergiert und die Suspension auf pH 7.3 eingestellt. Gleichzeitg werden 17.7 g Ca(NO₃)₂·4H₂O in 150 ml Wasser gelöst und die Lösung innerhalb einer Stunde zur Leuchtstoffsuspension getropft. Während des Zutropfens wird der pH-Wert der Lösung durch tropfenweise Zugabe von Ammoniumhydroxid-Lösung zwischen pH 6.9 und 7.3 gehalten. Anschließend werden 650 g PVAL-Lösung (Mowiol® 44-88, 10 Gew.-% in Wasser) auf pH 7 eingestellt und unter Rühren zur Leuchtstoffsuspension gegeben. Schließlich werden 10 ml einer Ammoniumdichromat-Lösung (10 Gew-% in Wasser) hinzugegeben.

Mittels einer Rakel wird eine dünne Schicht der ZnS:Ag-Suspension auf einem Flachbildschirmsubstrat aufgebracht und bei 40 °C getrocknet. Dann wird diese Schicht durch eine Lochmaske belichtet, wobei die Schicht an den belichteten Stellen wasserunlöslich wird. Anschließend wird die Schicht einer Sprühentwicklung mit Wasser unterzogen, wodurch die Schicht an den nicht belichteten Stellen entfernt wird und nur die punktförmigen Bildelemente auf dem Substrat verbleiben. Analog wird eine dünne Schicht von ZnS:Cu und ZnCdS:Ag jeweils aufgebracht, belichtet und entwickelt. Anschließend werden die organischen Bestandteile des so erhaltenen Leuchtschirmes durch Ausheizen bei Temperaturen > 400 °C entfernt.

In gleicher Art und Weise hergestellt wird als Standard ein Leuchtschirm mit drei Leuchtstoffzusammensetzungen in den Farben rot, blau und grün, die keine stabilisierende Beschichtung haben. Diese Leuchtschirme werden einem beschleunigten Lebensdauertest (ALT) bezüglich Bildhelligkeit und Farbwertwiedergabe in Relation zur eingestrahlten Strahlungsenergiemenge einer Strahlung von 4 KV unterzogen. Während der Effizienz I/Io des Standards anfangs stark abfällt und schließlich auf einem Niveau von 20% des Ausgangswertes konstant bleibt, fällt die Bildhelligkeit des Bildschirmes mit den Leuchtstoffen nach der Erfindung nur wenig ab und bleibt bei etwa 80 % des Ausgangswertes konstant.

### Ausführungsbeispiel 27

### (Flachbildschirm-Trockenverfahren)

Die beschichteten Leuchtstoffpulver nach Ausführungsbeispiel 1 bis 14 werden zur Herstellung eines Flachbildschirmes für eine Farbbildröhre verwendet. Dazu wird auf die Innenseite des Leuchtschirmes eine dünne lichtempfindliche Schicht, die bei Belichtung klebrig wird, aufgebracht und getrocknet. Dann wird diese Schicht durch eine Lochmaske belichtet und die belichteten klebrigen Bildelemente werden mit einel Leuchtstoffzusammensetzung nach Ausführungsbeispiel 1 getont. In einer zweiten und dritten Belichtung werden jeweils andere Bereiche der lichtempfindlichen Schicht mit den Leuchtstoffzusammensetzungen nach Ausführungsbeispiel 2 und 3 getont. Anschließend wird die lichtempfindliche Schicht durch Ausheizen bei Temperaturen 400 °C entfernt. In gleicher Art und Weise hergestellt wird als Standard ein Leuchtschirm mit drei Leuchtstoffzusammensetzungen in den Farben rot, blau und grün, die keine stabilisierende Beschichtung haben.

Diese Leuchtschirme werden einem beschleunigten Lebendauertest (ALT) bezüglich Bildhelligkeit und Farbwertwiedergabe in Relation zur eingestrahlten Strahlungsenergiemenge einer Strahlung von 4 kV unterzogen. Während die Effizienz I/Io des Standards anfangs stark abfällt und schließlich auf einem Niveau von 20 % des Ausgangswertes konstant bleibt, fällt die Bildhelligkeit des Bildschirmes mit den Leuchtstoffen nach der Erfindung nur wenig ab und bleibt bei etwa 80 % des Ausgangswertes konstant.

## Patentansprüche

1. Lumineszierender Schirm mit einer Leuchtstoffzusammensetzung aus einem sulfid- und/oder selenidhaltigen Leuchtstoff mit einer Beschichtung, die ein oder mehrere catena-Polyphospate mit einer Ketten lange gleich oder größer als 3 von ein oder mehreren Erdalkalimetallen, Zink, Cadmium und /oder Mangan enthält.

2. Lumineszierender Schirm nach Anspruch 1,
dadurch gekennzeichnet,
daß die catena-Polyphosphate eine Kettenlänge von 3 bis 90 haben.

3. Lumineszierender Schirm nach Anspruch 1 und 2,
dadurch gekennzeichnet,
daß die Beschichtung catena- Polyphospate ein oder mehrerer Erdalkalimetalle und 0,1 bis 20 Gew.-% catena-Polyphosphate von Zink, Cadmium und/oder Mangan enthält.

4. Lumineszierender Schirm nach Anspruch 1 bis 3,
dadurch gekennzeichnet,
daß das Erdalkalimetall Calcium oder Strontium oder Barium ist und die Beschichtung 10 Gew.-% Cadmium-catena-polyphosphat enthält.

5. Lumineszierender Schirm nach Anspruch 1 bis 3,
dadurch gekennzeichnet,
daß Erdalkalimetall wenigstens ein Element aus der Gruppe Calcium, Strontium und/oder Barium ist und die Beschichtung 5 Gew.-% Zink-catena-polyphosphat und/oder 5 Gew.-% Mangan-catena-polyphosphat enthält.

6. Luminezierender Schirm nach Anspruch 1 bis 5,
dadurch gekennzeichnet,
daß der Leuchtstoff aus aktiviertem Zinksulfid, Zink-Cadmiumsulfid, Zinksulfidselenid und/oder Zink-Cadmium-Sulfidselenid besteht und die Beschichtung ein oder mehrere Calcium-catena-polyphosphate enthält.

7. Lumineszierender Schirm nach Anspruch 1,
dadurch gekennzeichnet,
daß der Leuchtstoff aus aktiviertem Zinksulfid, Zinkselenid und/oder Zinksulfidselenid besteht und die Beschichtung Cadmium-catena-polyphosphat enthält.

8. Lumineszierender Schirm nach Anspruch 1,
dadurch gekennzeichnet,
daß der Leuchtstoff aus aktiviertem Zinksulfid, Zinkselenid und/oder Zinksulfidselenid besteht und die Beschichtung Zink-catena-polyphosphat enthält.

9. Lumineszierender Schirm nach Anspruch 1,
dadurch gekennzeichnet,
daß der Leuchtstoff aus aktiviertem Cadmiumsulfid und/oder Cadmiumsulfidselenid besteht und die Beschichtung Cadmium-catena-polyphospat enthält.

## Claims

1. A luminescent screen comprising a phosphor composition of a sulphide and/or selenide-containing phosphor which is provided with a coating which comprises one or more catena-polyphosphates of one or more alkaline earth metals, zinc, cadmium and/or manganese, the chain length of said catena-polyphosphate(s) being equal to or above 3.

2. A luminescent screen as claimed in Claim 1, characterized in that the catena-polyphosphates have a chain length of 3 to 90.

3. A luminescent screen as claimed in Claims 1 and 2, characterized in that the coating comprises catena-polyphosphates of one or more alkaline earth metals and 0.1 to 20 wt. % catena-polyphosphates of zinc, cadmium and/or manganese.

4. A luminescent screen as claimed in Claims 1 to 3, characterized in that the alkaline earth metal is calcium, strontium or barium and the coating comprises 10 wt. % cadmium-catena-polyphosphate.

5. A luminescent screen as claimed in Claims 1 to 3, characterized in that the alkaline earth metal is at least an element of the group formed by calcium, strontium and/or barium, and the coating comprises 5 wt. % zinc-catena-polyphosphate and/or 5 wt. % manganese-catena-polyphosphate.

6. A luminescent screen as claimed in Claims 1 to 5, characterized in that the phosphor is composed of activated zinc sulphide, zinc cadmium sulphide, zinc sulphide selenide and/or zinc cadmium sulphide selenide, and the coating comprises one or more calcium-catena-polyphosphates.

7. A luminescent screen as claimed in Claim 1, characterized in that the phosphor is composed of activated zinc sulphide, zinc selenide and/or zinc sulphide selenide, and the coating comprises cadmium-catena-polyphosphate.

8. A luminescent screen as claimed in Claim 1, characterized in that the phosphor is composed of activated zinc sulphide, zinc selenide and/or zinc sulphide selenide, and the coating comprises zinc-catena-polyphosphate.

9. A luminescent screen as claimed in Claim 1, characterized in that the phosphor is composed of activated cadmium sulphide and/or cadmium sulphide selenide, and the coating comprises cadmium-catena-polyphosphate.

## Revendications

1. Ecran luminescent avec une composition de substance luminescente en une substance luminescente contenant du sulfure et/ou du séléniure avec un revêtement qui contient un ou plusieurs caténapolyphosphates (1) d'un ou plusieurs métaux alcalino-terreux, du zinc, du cadmium et/ou du manganèse.

2. Ecran luminescent selon la revendication 1, caractérisé en ce que les caténapolyphosphates ont une longueur de chaîne de 3 à 90.

3. Ecran luminescent selon l'une des revendications 1 et 2, caractérisé en ce que le revêtement des caténapolyphosphates contient un ou plusieurs métaux alcalino-terreux et 0,1 à 20% en poids de caténapolyphosphates de zinc, de cadmium et/ou de manganèse.

4. Ecran luminescent selon l'une des revendications 1 à 3, caractérisé en ce que le métal alcalino-terreux est le calcium, le strontium ou le baryum et le revêtement contient 10% en poids de caténapolyphosphate de cadmium.

5. Ecran luminescent selon l'une des revendications 1 à 3, caractérisé en ce que le métal alcalino-terreux est au moins un élément du groupe calcium, strontium et/ou baryum et le revêtement contient 5% en poids de caténapolyphosphate de zinc et/ou 5% en poids de caténapolyphosphate de manganèse.

6. Ecran luminescent selon l'une des revendications 1 à 5, caractérisé en ce que la substance luminescente se compose de sulfure de zinc, sulfure de zinc-cadmium, séléniure-sulfure de zinc et/ou séléniure-sulfure de zinc - cadmium et le revêtement contient un ou plusieurs caténapolyphosphates de calcium.

7. Ecran luminescent selon la revendication 1, caractérisé en ce que la substance luminescente se compose de sulfure de zinc, de séléniure de zinc et/ou de sulfure-séléniure de zinc activé et le revêtement contient un caténapolyphosphate de cadmium.

8. Ecran luminescent selon la revendication 1, caractérisé en ce que la substance luminescente se compose de sulfure de zinc, séléniure de zinc et/ou sulfure-séléniure de zinc activé et le revêtement contient un caténapolyphosphate de zinc.

9. Ecran luminescent selon la revendication 1, caractérisé en ce que la substance luminescente se compose de sulfure de cadmium et/ou de sulfure-séléniure de cadmium activé et le revêtement contient un caténapolyphosphate de cadmium.
